Europäisches Patentamt

European Patent Office

Office européen des brevets

(11) Veröffentlichungsnummer: **0 388 801**
**A2**

## (12) EUROPÄISCHE PATENTANMELDUNG

(21) Anmeldenummer: 90104950.2

(51) Int. Cl.⁵: **A01D 34/64**

(22) Anmeldetag: **16.03.90**

(30) Priorität: **22.03.89 US 327280**

(43) Veröffentlichungstag der Anmeldung:
**26.09.90 Patentblatt 90/39**

(84) Benannte Vertragsstaaten:
**DE FR GB**

(71) Anmelder: **DEERE & COMPANY**
**1 John Deere Road**
**Moline, Illinois 61265(US)**

(72) Erfinder: **Wykhuis, Lloyd Arnold**
**861 Alphyll Lane**
**Mayville, Wisconsin 53050(US)**

(74) Vertreter: **Feldmann, Bernhard et al**
**DEERE & COMPANY European Office Patent**
**Department Steubenstrasse 36-42**
**D-6800 Mannheim 1(DE)**

(54) Hydraulisch betätigbare Hubvorrichtung.

(57) Eine hydraulisch betätigbare Hubvorrichtung (24) für ein Fahrzeug ist mit einem ersten und einem zweiten mit Querabstand zueinander angeordneten Hubarm (32 und 34) versehen, die einenends vertikal schwenkbar am Fahrzeug angeschlossen sind, sich von ihrer Anschlußstelle am Fahrzeug nach außen zu Anschlüssen für ein Gerät erstrecken und über einen einzigen Hubzylinder (54) höhenverstellbar sind, der einenends an einem die Hubarme (32, 34) miteinander verbindenden Querteil (56), anderenends am Fahrzeug anschließbar und mit Bezug auf den Querteil (56) längsverstellbar ist.

**FIG. 2**

Die Erfindung bezieht sich auf eine hydraulisch betätigbare Hubvorrichtung für ein Fahrzeug mit einem ersten und einem zweiten mit Querabstand zueinander angeordneten Hubarm, die einenends vertikal schwenkbar am Fahrzeug angeschlossen sind und sich von ihrer Anschlußstelle am Fahrzeug nach außen zu Anschlüssen für ein Gerät erstrecken.

Bei dieser bekannten Hubvorrichtung (JOHN DEERE F935) ist jedem Hubarm ein Hubzylinder zugeordnet, und das Gerät ist als frontseitig an einen Gartenschlepper angeschlossener Rasenmäher ausgebildet. Bei Druckbeaufschlagung kann der Rasenmäher aus seiner Arbeitsposition ausgehoben und in eine Stellung verbracht werden, in der kleine Hindernisse, wie Bordsteine usw., leicht überwunden werden können. Der hydraulische Kreislauf für die beiden zueinander parallel geschalteten Hubzylinder ist darüber hinaus noch so ausgelegt, daß in der Arbeitsstellung des Rasenmähers ein Teil des Gerätegewichts auf den Gartenschlepper übertragen werden kann. Zwei Hubzylinder erfordern natürlich einen komplexeren hydraulischen Kreislauf und erhöhen die Kosten für die gesamte hydraulische Anlage.

Andererseits ist es aber auch nicht mehr neu, eine Hubvorrichtung mit nur einem Hubzylinder auszubilden (US-A-4 307 561).

Die mit der Erfindung zu lösende Aufgabe wird darin gesehen, die bekannte Hubvorrichtung vorteilhafter auszubilden und Vorkehrungen für den Fall zu treffen, wenn das Gerätegewicht nicht gleichmäßig auf die beiden Hubarme verteilt sein sollte.

Diese Aufgabe ist nach der Erfindung dadurch gelöst worden, daß die Hubarme über einen einzigen Hubzylinder höhenverstellbar sind, der einenends an einem die Hubarme miteinander verbindenden Querteil, anderenends am Fahrzeug anschließbar und mit Bezug auf den Querteil längsverstellbar ist. Auf diese Weise ist eine kompakte hydraulische Anlage geschaffen, die billiger herzustellen ist und Einrichtungen vorsieht, über die der einzige Hubzylinder querverstellbar ist, wenn das Gerätegewicht nicht gleichmäßig auf die beiden Hubarme verteilt sein sollte. Denn nur bei einer gleichmäßigen Gewichtsverteilung auf die Hubarme ist ein einwandfreies Arbeiten des Gerätes in einer Schwimmstellung, d. h. wenn ein Teil des Gerätegewichts auf das Fahrzeug übertragen wird, gewährleistet, was besonders wünschenswert ist, wenn es sich bei dem an die Hubvorrichtung angeschlossenen Gerät um einen Rasenmäher handelt, wo auf eine gleichmäßige Schnitthöhe Wert gelegt werden muß.

Im einzelnen wird hierzu nach der Erfindung vorgeschlagen, daß am Rahmen des Fahrzeugs eine Konsole zur Aufnahme des einen Endes des Hubzylinders derart angeordnet ist, daß sie parallel zum Querteil verstellbar ist, wobei das andere Ende des Hubzylinders an einer von mehreren in Längsrichtung des Querteils gesehen nebeneinander liegenden und am Querteil vorgesehenen Anschlußstellen anschließbar ist.

Zweckmäßig kann der Hubzylinder in der Konsole um eine erste Achse schwenkbar aufgenommen sein.

Um eine schnelle und leichte Verschiebung der Konsole zu erreichen, kann nach einem weiteren Vorschlag der Erfindung vorgesehen werden, daß der Rahmen des Fahrzeugs geschlitzt ausgebildet ist. In diesen Schlitz wird eine auch durch die Konsole geführte Schraube gesteckt und von außen durch eine Mutter gesichert, nach deren Lokkern sich die Konsole in einfacher Weise verstellen läßt. Der Schlitz kann dabei ein aufgeweitetes Ende zum leichten Einsetzen des Schraubenkopfes aufweisen.

Damit das Gerät in seiner Arbeitsstellung den Bodenkonturen folgen kann, sind die Enden des Querteils mit den Hubarmen derart verbunden, daß jeder Hubarm mit Bezug auf den anderen eine vertikal gerichtete Relativbewegung ausführen kann.

Da der Hubzylinder bei der Höhenverstellung der Bahn des angeschlossenen Gerätes folgt, wird nach der Erfindung weiter vorgeschlagen, daß der Hubzylinder über ein Drehgelenk mit dem Querteil verbunden ist.

Vorteilhaft kann der Querteil als Stange mit einer Vielzahl von Bohrungen zur Aufnahme eines zum Drehgelenk gehörenden, in eine der Bohrungen wahlweise einsetzbaren Zapfens ausgebildet sein.

Auch können nach der Erfindung die Hubarme von einer vorgewählten etwa mittigen Stelle aus zu den Anschlüssen für das Gerät divergieren, und die Enden des Querteils können über Konsolen im Bereich der vorgewählten Stelle mit den Hubarmen verbunden werden.

Um in einfacher Weise die Relativbewegung ausführen zu können, sind die Enden des Querteils bzw. die diese aufnehmenden Konsolen geschlitzt ausgebildet.

Die Verstellbarkeit der Konsole kann auch dadurch erreicht werden, daß die Konsole auf einem Hohlträger des Rahmens verschiebbar ist und das eine Ende des Hubzylinders in einem Schwenkrohr, das mit der Konsole fest verbunden ist, drehbar aufnimmt.

In der Zeichnung ist ein nachfolgend näher erläutertes Ausführungsbeispiel der Erfindung dargestellt. Es zeigt:

Fig. 1 einen frontseitig an einen Gartenschlepper angeschlossenen Rasenmäher mit der erfindungsgemäßen Hubvorrichtung,

Fig. 2 einen Ausschnitt aus der Hubvorrichtung mit einem einzigen Hubzylinder,

Fig. 3 einen Schnitt nach der Linie 3:3 in Fig. 2,

Fig. 4 den Anschluß des Hubzylinders an den Fahrzeugrahmen in einer weiteren Ausführungsform und.

Fig. 5 einen Schnitt nach der Linie 5:5 in Fig. 4.

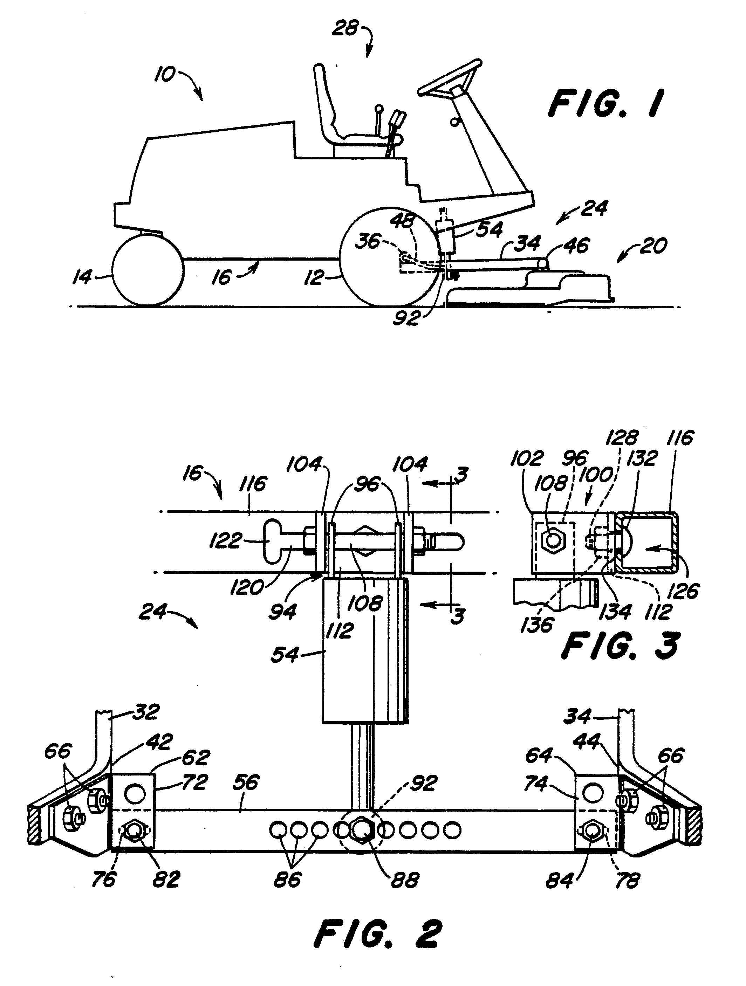

In Fig. 1 der Zeichnung ist mit 10 ein Fahrzeug in Form eines Gartenschleppers bezeichnet, das vordere Treibräder 12 und rückwärtige lenkbare Räder 14, die einen Rahmen 16 tragen, aufweist. Ein Gerät 20 - im Ausführungsbeispiel ein Rasenmäher - ist frontseitig an das Fahrzeug 10 über eine Hubvorrichtung 24 angeschlossen. Die Hubvorrichtung kann von einem vorne am Fahrzeug 10 vorgesehenen Bedienungsplatz 28 aus, der auch weitere für die Bedienung des Fahrzeugs und des angeschlossenen Gerätes erforderliche Bedienungselemente beinhaltet, betätigt werden.

Die Hubvorrichtung 24 weist einen ersten und einen zweiten mit Querabstand zueinander angeordneten Hubarm 32 und 34 auf, die schwenkbar an dem Rahmen 16 des Fahrzeugs 10 an Anschlußstellen 36 angreifen. Letztere befinden sich im Bereich der Vorderachse und erlauben eine Höhenverstellung der Hubarme 32 und 34 um horizontale Querachsen. Von ihren Anschlußstellen 36 aus erstrecken sich die Hubarme 32 und 34 nach vorne zu Knickstellen 42, von denen aus die Hubarme 32, 34 divergierend weiter nach vorne verlaufen. Die frontseitigen Enden der Hubarme 32, 34 greifen gelenkig an Anschlüssen 46 an, die mit gegenseitigem Querabstand an der Oberseite des Gerätes 20 vorgesehen sind. Eine Stabilisierungsstange 48 ist im Bereich einer Anschlußstelle 36 einenends und anderenends an dem gegenüberliegenden Hubarm 32 bzw. 34 vorgesehen. Je nachdem, wie das an das Fahrzeug 10 anzuschließende Gerät 20 ausgebildet ist, kann es vorkommen, daß die Lage des Schwerpunktes variiert, so daß ungleiche Gewichtsanteile auf die Hubarme 32 und 34 übertragen werden, d. h. die Hubarme werden ungleich belastet, wodurch ein einwandfreier Arbeitseinsatz des Gerätes, insbesondere wenn es sich um einen Rasenmäher handelt, bei dem stets eine gleichmäßige Schnitthöhe erzielt werden soll, nicht mehr unbedingt gewährleistet ist. Aus diesem Grund ist die Hubvorrichtung 24 mit einem einzigen quer einstellbaren Hubzylinder 54 ausgerüstet.

Dieser Hubzylinder 54 ist mit seinem zylinderseitigen Ende schwenkbar an den Rahmen 16 angeschlossen, und zwar unterhalb des Bedienungsplatzes 28 am frontseitigen Ende des Fahrzeugs 10. Das kolbenstangenseitige Ende des Hubzylinders 54 greift etwa in der Mitte eines stangenförmigen Querteils 56 an, der sich seinerseits zwischen den Knickstellen 42 an den Hubarmen 32, 34 erstreckt. Die Befestigung erfolgt über als Winkeleisen ausgebildete Konsolen 62 und 64, die an den Knickstellen 42 über Schrauben 66 angeschlossen sind und nach innen gerichtete Schenkel 72 und 74 mit Öffnungen aufweisen, die zu sich quer erstreckenden Langlöchern 76 und 78 in den beiden Enden des Querteils 56 ausgerichtet sind. Feststeller 82 und 84 sind durch die entsprechenden Öffnungen in den Schenkeln 72, 74 der Konsolen 62, 64 und die Langlöcher 76, 78 geführt und positionieren den Querteil 56 zwischen den Knickstellen 42, 44 an den Hubarmen 32 und 34. Die Langlöcher 76 und 78 ermöglichen eine Relativbewegung zwischen den Konsolen 62 und 64 und den entsprechenden Enden des Querteils 56, und die so gewählte Verbindung führt zu einer voneinander unabhängigen Vertikalbewegung der beiden Hubarme 32 und 34. Die Stabilisierungsstange 48 kann mit einer oberen Öffnung in einem der Schenkel 72 oder 74 verbunden werden.

Der Querteil 56 ist mit einer Vielzahl von nebeneinander liegenden Öffnungen 86 versehen, die wahlweise einen Zapfen 88 aufnehmen können, der sich durch ein Drehgelenk 92 erstreckt, das mit dem unteren Ende der Kolbenstange des Hubzylinders 54 verbunden ist.

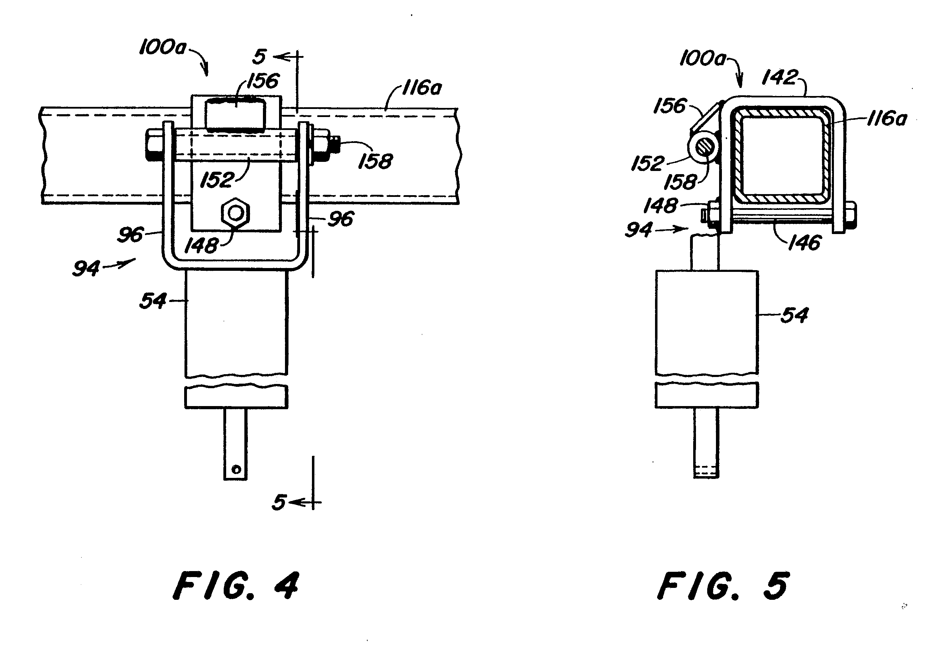

Der Hubzylinder 54 weist einen zylinderseitigen Anschluß 94 auf, der aus zwei nach oben gerichteten und aufgebohrten Ösen 96 besteht. Diese werden schwenkbar von einer bügelförmig ausgebildeten und quer verstellbaren Konsole 100 derart aufgenommen, daß sie um eine quer verlaufende Achse verschwenken können. Im einzelnen weist die in den Fig. 2 und 3 dargestellte Konsole 100 einen sich nach vorne öffnenden u-förmigen Bügel 102 mit aufgebohrten Schenkeln 104 auf, die die Ösen 96 von außen umfassen. Ein Schwenkzapfen 108 ist durch die Bohrungen in den Ösen 96 und in den Schenkeln 104 hindurchgeführt und schließt damit den Hubzylinder 54 vertikal schwenkbar an die Konsole 100 bzw. deren Bügel 102 an. Der Stegteil 112 des u-förmigen Bügels 102 ist an eine Stirnseite eines quer verlaufenden Hohlträgers 116 angeschlossen, der Bestandteil des Rahmens 16 des Fahrzeugs 10 ist. In die Stirnseite des Hohlträgers 116 ist ein Langloch 120 derart eingearbeitet, daß seine lange Achse horizontal verläuft, wobei ein Ende 122 des Langloches 120 noch aufgebohrt ist. Über eine Schraubverbindung 126 ist der Bügel 102 der Konsole 100 verschiebbar und verdrehbar an die Stirnseite des Hohlträgers 116 angeschlossen. Die Schraubverbindung 126 besteht im einzelnen aus einer Schraube 128 mit einem Kopf 132, der in den Hohlträger 116 durch das aufgebohrte Ende 122 des Langloches 120 eingesetzt wird. Die Schraube 128 erstreckt sich dann von ihrem sich in dem Hohlträger 116 befindlichen Kopf 132 aus durch eine Buchse 134 und eine Bohrung im Stegteil 112. Von außen wird die Schraubverbindung 126 über eine Mutter 136 gesichert, die gegen die Buchse 134 angezogen wird und den Bügel 102 in einer Stellung sichert, die entsprechend der Gewichtsverteilung an den Hub armen 32, 34 ausgewählt wird. Der Bügel 102 kann um die Längsachse der Schraube 128 drehen, wenn die untere Anschlußstelle des Hubzylinders 54 nicht zu seiner oberen ausgerichtet sein sollte.

In den Fig. 4 und 5 ist ein weiteres Ausführungsbeispiel für den Anschluß des zylinderseitigen Endes des Hubzylinders an den Rahmen 16 dargestellt. In diesen Figuren ist die verstellbare Konsole mit 100a bezeichnet und besteht im einzelnen aus einem nach unten hin offenen u-förmigen Bügel 142, der verschiebbar ist, einen Hohlträger 116a von oben her übergreift und durch eine Schraube 146 gesichert wird, die in eine mit der unteren Stirnseite des Bügels 142 verschweißte Mutter 148 einschraubbar ist. Des weiteren ist noch ein quer verlaufendes Schwenkrohr 152 mit der Stirnseite des Bügels 142 oberhalb der Mutter 148 verschweißt, das über eine Strebe 156 versteift werden kann. Die Strebe 156 ist hierzu ebenfalls mit dem Schwenkrohr 152 und dem u-förmigen Bügel 142 verschweißt. Die Schraube 146 wird entsprechend angezogen, damit ein guter Sitz des Bügels 142 auf dem Hohlträger 116a entsteht und gleichzeitig seine Verschiebung auf dem Hohlträger 116a gegebenenfalls nach Lockern der Schraube 148 möglich ist. Der Hubzylinder 54 ist schwenkbar mit der Konsole 100a bzw. deren Bügel 142 über einen Schwenkzapfen 158 verbunden, der sich durch das Schwenkrohr 152 und durch Bohrungen in den Ösen 96 am zylinderseitigen Ende erstreckt. Der Hubzylinder 54 ist damit auf dem Hohlträger 116a verschiebbar angeordnet und kann zu einer der Bohrungen 86 in dem Querteil 56 ausgerichtet werden.

Der Hubzylinder 54 ist in einen nicht gezeigten hydraulischen Kreislauf eingebunden und kann über ein am Bedienungsplatz 28 vorgesehenes Betätigungsorgan mit Druckflüssigkeit beaufschlagt werden, um ein Verschwenken der Hubarme 32, 34 zu bewirken. Das angeschlossene Gerät 20 kann dann je nach der Betätigung angehoben oder abgesenkt wer den. Zusätzlich kann der Hubzylinder 54 so betätigt werden, daß ein Teil des Gerätegewichtes auf das Fahrzeug 10 übertragen werden kann. Ein entsprechender hydraulischer Kreislauf mit einem Steuerventil ist in der europäischen Patentanmeldung Nr. 90102758.1 dargestellt, auf die hier ausdrücklich verwiesen wird.

Unter der Annahme, daß die Gewichtsverteilung beim Einsatz an den Hubarmen 32, 34 gleich oder etwa gleich ist, wird der Zapfen 88 in die mittlere Bohrung 86 am Querteil 56 eingesetzt, und der Bügel 102 wird an einer Stelle oberhalb dieser Bohrung festgesetzt. Durch Einfahren der Kolbenstange in den Hubzylinder 54 wird der Querteil 56 hochgeschwenkt und folglich auch die beiden Hubarme 32, 34 gemeinsam, bis das Gerät 20 seine Transportstellung erreicht. Durch Ausfahren der Kolbenstange wird das Gerät 20 abgesenkt, wobei sich die Hubarme 32, 34 gemeinsam ebenso wie der Querteil 56 abwärts verstellen. Sobald sich das Gerät 20 in der in Fig. 1 wiedergegebenen Arbeitsstellung befindet, ermöglichen die Langlöcher 76 und 78 in dem Querteil 56 eine voneinander unabhängige Vertikalverstellung der Hubarme 32, 34, damit das Gerät der Bodenkontur folgen kann. Eine Schwimmstellung des Gerätes wird dann erreicht, wenn der Hubzylinder derart mit Druckflüssigkeit beaufschlagt wird, daß die Kolbenstange einfahren will, ohne jedoch das Gerät 20 tatsächlich vom Boden abzuheben. Die Anordnung und Ausbildung des Querteils 56 ermöglicht dann auch in dieser Stellung, daß die Gewichtsverteilung bzw. Gewichtsübertragung an den Hubarmen 32, 34 gleich bleibt. Stellt die Bedienungsperson fest, daß das Gerät 20 nicht gleichmäßig aushebt oder daß eine Seite in der Schwimmstellung mehr Druck bekommt als die andere Seite, dann braucht die Bedienungsperson lediglich im Falle der Ausführung nach Fig. 2 und 3 die Mutter 136 zu lockern und den Zapfen 88 aus der entsprechenden Bohrung 86 im Querteil 56 zu entfernen, wonach der Hubzylinder 54 so weit wie nötig quer verstellt werden kann. Stellt zum Beispiel die Bedienungsperson fest, daß der Hubarm 32 später als der Hubarm 34 angehoben und als erster wieder abgesenkt wird, dann muß sie den Hubzylinder nur näher an den Hubarm 32 heranschieben, wodurch dieser mehr Druck und der Hubarm 34 weniger Druck bekommt, so daß letztlich wieder eine gleichmäßige Gewichtsverteilung entsteht. Das Drehgelenk 92 an dem kolbenstangenseitigen Ende des Hubzylinders 54 wird dann wieder mit dem Querteil 56 verbunden, indem der Zapfen 88 in die ausgewählte Bohrung 86 eingesetzt wird. Der uförmige Bügel 102 wird dann im Bereich des Langloches 120 seitlich verschoben, bis der Hubzylinder 54 eine im wesentlichen aufrechte Position einnimmt. Danach muß die Mutter 136 noch angezogen werden, um den Bügel 102 festzustellen. Bei der Ausführungsform nach den Fig. 4 und 5 kann nach dem Lockern der Schraube 146 der Bügel 142 auf dem Hohlträger 116a verschoben werden. Das Drehgelenk 92 an dem kolbenstangenseitigen Ende und die drehbare Aufhängung des zylinderseitigen Endes des Hubzylinders 54 lassen es zu, daß sich der Querteil 56 und mit ihm das angeschlossene Gerät 20 gegenüber dem Rahmen 16 in gewissen Grenzen quer verstellen kann. Die Langlöcher 76 und 78 ermöglichen ein individuelles Ausweichen in Höhenrichtung, so daß die Hubvorrichtung 24 alle Voraussetzungen für eine gleichmäßige Gewichtsverteilung, Schwimmstellung und Anpassung an die Bodenkontur für ein Gerät ermöglicht, das über einen einzigen Hubzylinder gesteuert wird. Als Gerät kann ein Rasenmäher vorgesehen sein. Doch läßt sich die Hubvorrichtung gleich gut bei anderen Bodenpflegegeräten einsetzen.

## Ansprüche

1. Hydraulisch betätigbare Hubvorrichtung (24) für ein Fahrzeug (10) mit einem ersten und einem zweiten mit Querabstand zueinander angeordneten Hubarm (32 und 34), die einenends vertikal schwenkbar am Fahrzeug (10) angeschlossen sind und sich von ihrer Anschlußstelle (36) am Fahrzeug (10) nach außen zu Anschlüssen (46) für ein Gerät (20) erstrecken, dadurch gekennzeichnet, daß die Hubarme (32, 34) über einen einzigen Hubzylinder (54) höhenverstellbar sind, der einenends an einem die Hubarme (32, 34) miteinander verbindenden Querteil (56), anderenends am Fahrzeug (10) anschließbar und mit Bezug auf den Querteil (56) längsverstellbar ist.

2. Hubvorrichtung (24) nach Anspruch 1, dadurch gekennzeichnet, daß am Rahmen (16) des Fahrzeugs (10) eine Konsole (100) zur Aufnahme des einen Endes des Hubzylinders (54) derart angeordnet ist, daß sie parallel zum Querteil (56) verstellbar ist, wobei das andere Ende des Hubzylinders (54) an einer von mehreren in Längsrichtung des Querteils (56) gesehen nebeneinander liegenden und am Querteil (56) vorgesehenen Anschlußstellen (86) anschließbar ist.

3. Hubvorrichtung (24) nach Anspruch 2, dadurch gekennzeichnet, daß der Hubzylinder (54) in der Konsole (100) um eine erste Achse schwenkbar aufgenommen ist.

4. Hubvorrichtung (24) nach Anspruch 2, dadurch gekennzeichnet, daß der Rahmen (16) des Fahrzeugs (10) zur verschiebbaren Aufnahme der Konsole (100) geschlitzt ausgebildet ist.

5. Hubvorrichtung (24) nach einem oder mehreren der vorherigen Ansprüche, dadurch gekennzeichnet, daß die En den des Querteils (56) mit den Hubarmen (32, 34) derart verbunden sind, daß jeder Hubarm (32, 34) mit Bezug auf den anderen eine vertikal gerichtete Relativbewegung ausführen kann.

6. Hubvorrichtung (24) nach Anspruch 2, dadurch gekennzeichnet, daß der Hubzylinder (54) über ein Drehgelenk (92) mit dem Querteil (56) verbunden ist.

7. Hubvorrichtung (24) nach einem oder mehreren der vorherigen Ansprüche, dadurch gekennzeichnet, daß der Querteil (56) als Stange mit einer Vielzahl von Bohrungen (86) zur Aufnahme eines zum Drehgelenk (92) gehörenden, in eine der Bohrungen (86) wahlweise einsetzbaren Zapfens (88) ausgebildet ist.

8. Hubvorrichtung (24) nach einem oder mehreren der vorherigen Ansprüche, dadurch gekennzeichnet, daß die Hubarme (32, 34) von einer vorgewählten etwa mittigen Stelle aus zu den Anschlüssen (46) für das Gerät (20) divergieren und daß die Enden des Querteils (56) über Konsolen (62, 64) im Bereich der vorgewählten Stelle mit den Hubarmen (32, 34) verbunden sind.

9. Hubvorrichtung (24) nach Anspruch 8, dadurch gekennzeichnet, daß die Enden des Querteils (56) bzw. die diese aufnehmenden Konsolen (62, 64) geschlitzt ausgebildet sind.

10. Hubvorrichtung (24) nach einem oder mehreren der vorherigen Ansprüche, dadurch gekennzeichnet, daß die Konsole (100a) auf einem Hohlträger (116a) des Rahmens (16) verschiebbar ist und das eine Ende des Hubzylinders (54) in einem Schwenkrohr (152), das mit der Konsole (100a) fest verbunden ist, drehbar aufnimmt.

FIG. 1

FIG. 3

FIG. 2

FIG. 5

FIG. 4